# EUROPEAN PATENT APPLICATION

(11) **EP 4 700 599 A1**
(43) Date of publication of application: **25.02.2026**
(21) Application number: 25183438.8
(22) Date of filing: 17.06.2025
(51) Int. Cl.: G06F 16/2455

(54) **CACHE ENABLED DATA ACCESS PLATFORM**

(30) Priority: 23.08.2024 US 202418814242
(71) Applicant: eBay Inc., San Jose, CA 95125 (US)
(72) Inventor: NAIR, Apurva Aravindakshan, San Jose, 95118 (US); PAUL, Kishore, Cupertino, 95014 (US); CHERENGOTIL, Sanjeev House Kumaran, Mountain House, 95391 (US)
(74) Representative: Murgitroyd & Company

(57) **Abstract**

A transaction system receives a transaction request for a database service. The transaction system retrieves, by a first microservice, a set of data from a data access layer of the database service in response to receiving the transaction request. The transaction system performs a set of computations based on the set of data retrieved from the data access layer. The transaction system stores the set of computations in one or more cache nodes of a data access service and accesses, by a second microservice, the set of computations, performed in response to retrieving the set of data by the first microservice, from the one or more cache nodes.

## Description

### BACKGROUND

The subject matter disclosed herein generally relates to a special-purpose machine that includes a system for completing transactions using multiple services, including computerized variants of such special-purpose machines and improvements to such variants, and to the technologies by which such special-purpose machines become improved compared to other special-purpose machines.

### BRIEF SUMMARY

The present invention provides a computer-implemented method and computer apparatus as defined in the appended claims.

In some aspects, the techniques described herein relate to a computer-implemented method including: receiving a transaction request for a database service; retrieving, by a first microservice, a set of data from a data access layer of the database service in response to receiving the transaction request; performing a set of computations based on the set of data retrieved from the data access layer; storing the set of computations in one or more cache nodes of a data access service; and accessing, by a second microservice, the set of computations, performed in response to retrieving the set of data by the first microservice, from the one or more cache nodes.

In some aspects, the techniques described herein relate to a computer-implemented method, further including: transmitting the transaction request from the first microservice to the data access service; determining, by the data access service, that the set of data is unavailable in the one or more cache nodes; and in response to determining, by the data access service, that the set of data is unavailable in the one or more cache nodes, retrieving the set of data from the data access layer.

In some aspects, the techniques described herein relate to a computer-implemented method, further including: determining, by the first microservice, that the transaction request is associated with the second microservice; and in response to determining, by the first microservice, that the transaction request is associated with the second microservice, transmitting, from the first microservice to the second microservice, a request to perform one or more operations to complete the transaction request.

In some aspects, the techniques described herein relate to a computer-implemented method, further including: determining, by the second microservice, that the transaction request is associated a set of additional microservices; and in response to determining, by the second microservice, that the transaction request is associated the set of additional microservices, transmitting, from the second microservice to each microservice in the set of additional microservices, a request to perform respective operations to complete the transaction request.

In some aspects, the techniques described herein relate to a computer-implemented method, further including: deleting at least a portion of the set of computations from the one or more cache nodes after a threshold period of time.

In some aspects, the techniques described herein relate to a computer-implemented method, wherein the set of computations is accessed by the second microservice from the one or more cache nodes without transmitting a request to the data access layer.

In some aspects, the techniques described herein relate to a computer-implemented method, further including: processing the set of computations by the second microservice; transmitting the processed set of computations to the first microservice from the second microservice; and completing, by the first microservice, the transaction request based on the processed set of computations received from the second microservice.

In some aspects, the techniques described herein relate to a computer-implemented method, wherein the transaction request is a first transaction request, further including: receiving a second transaction request; determining that the second transaction request is associated with at least a portion of the set of data previously retrieved in response to receiving the first transaction request; and accessing the portion of the set of data from the one or more cache nodes by the first microservice to complete the second transaction request.

In some aspects, the techniques described herein relate to a computer-implemented method, further including: determining, by the first microservice, that an item associated with the transaction is in an item bundle corresponding to an individual entity, the item bundle including a plurality of items; and storing the item bundle in the one or more cache nodes in response to determining, by the first microservice, that the item associated with the transaction is in the item bundle corresponding to the individual entity.

In some aspects, the techniques described herein relate to a computer-implemented method, further including: determining, by the first microservice, a location associated with the transaction request; and performing the set of computations based on the location associated with the transaction request and the set of data.

In some aspects, the techniques described herein relate to a computer-implemented method, wherein the transaction request is a first transaction request, further including: receiving an additional transaction request for the database service, the additional transaction request being associated with the location of the first transaction request; querying the data access service to determine whether the set of computations for the location have been stored in the one or more cache nodes; and accessing the set of computations for the location, previously computed in response to the first transaction request, by the second microservice in response to receiving the additional transaction request.

In some aspects, the techniques described herein relate to a computer-implemented method, including determining, by the first microservice, a category of a first entity associated with the transaction request; and performing the set of computations based on the category of the first entity associated with the transaction request and the set of data.

In some aspects, the techniques described herein relate to a computer-implemented method, wherein the transaction request is a first transaction request, further including: receiving an additional transaction request for the database service, the additional transaction request being associated with a category of a second entity that is identical to the category of the first entity; querying the data access service to determine whether the set of computations for the category of the first entity have been stored in the one or more cache nodes; and accessing the set of computations for the category of the second entity, previously computed in response to the first transaction request, by the second microservice in response to receiving the additional transaction request.

In some aspects, the techniques described herein relate to a computer-implemented method, wherein the one or more cache nodes are distributed across multiple computing nodes.

In some aspects, the techniques described herein relate to a computer-implemented method, further including: predicting that the transaction request is associated with an additional transaction request; identifying a set of microservices associated with the additional transaction request; retrieving an additional set of data from the data access layer associated with the additional transaction request; and storing the additional set of data in the one or more cache nodes, the additional set of data being accessed by the set of microservices from the one or more cache nodes in response to receiving the additional transaction request following completion of the transaction request.

In some aspects, the techniques described herein relate to a computing apparatus, the computing apparatus including: at least one processor; and a memory storing instructions that, when executed by the at least one processor, configure the apparatus to perform operations including: receiving a transaction request for a database service; retrieving, by a first microservice, a set of data from a data access layer of the database service in response to receiving the transaction request; performing a set of computations based on the set of data retrieved from the data access layer; storing the set of computations in one or more cache nodes of a data access service; and accessing, by a second microservice, the set of computations, performed in response to retrieving the set of data by the first microservice, from the one or more cache nodes.

In some aspects, the techniques described herein relate to a computing apparatus, wherein the operations include: transmitting the transaction request from the first microservice to the data access service; determining, by the data access service, that the set of data is unavailable in the one or more cache nodes; and in response to determining, by the data access service, that the set of data is unavailable in the one or more cache nodes, retrieving the set of data from the data access layer.

In some aspects, the techniques described herein relate to a computing apparatus, wherein the operations include: determining, by the first microservice, that the transaction request is associated with the second microservice; and in response to determining, by the first microservice, that the transaction request is associated with the second microservice, transmitting, from the first microservice to the second microservice, a request to perform one or more operations to complete the transaction request.

In some aspects, the techniques described herein relate to a computing apparatus, wherein the operations include: determining, by the second microservice, that the transaction request is associated with a set of additional microservices; and in response to determining, by the second microservice, that the transaction request is associated with the set of additional microservices, transmitting, from the second microservice to each microservice in the set of additional microservices, a request to perform respective operations to complete the transaction request.

In some aspects, the techniques described herein relate to a non-transitory computer-readable storage medium, the computer-readable storage medium including instructions that when executed by a computer, cause the computer to perform operations including: receiving a transaction request for a database service; retrieving, by a first microservice, a set of data from a data access layer of the database service in response to receiving the transaction request; performing a set of computations based on the set of data retrieved from the data access layer; storing the set of computations in one or more cache nodes of a data access service; and accessing, by a second microservice, the set of computations, performed in response to retrieving the set of data by the first microservice, from the one or more cache nodes.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 is a diagrammatic representation of a networked environment in which the present disclosure may be deployed, in accordance with some examples.
FIG. 2 is a block diagram illustrating examples of applications that, in one example, are provided as part of a networked system, in accordance with some examples.
FIG. 3 is a block diagram illustrating a transaction system that, in one example, is provided as part of a networked system, in accordance with some examples.
FIG. 4 illustrates a routine, in accordance with some examples.
FIG. 5 is a block diagram illustrating a representative software architecture, which may be used in conjunction with various hardware architectures herein described, according to some examples.
FIG. 6 is a diagrammatic representation of a machine in the form of a computer system within which a set of instructions may be executed for causing the machine to perform any one or more of the methodologies discussed herein, according to an example.

### DETAILED DESCRIPTION

The description that follows describes systems, methods, techniques, instruction sequences, and computing machine program products that illustrate examples of the present subject matter. In the following description, for purposes of explanation, numerous specific details are set forth in order to provide an understanding of various examples of the present subject matter. It will be evident, however, to those skilled in the art, that examples of the present subject matter may be practiced without some or other of these specific details. Examples merely typify possible variations. Unless explicitly stated otherwise, structures (e.g., structural components, such as modules) are optional and may be combined or subdivided, and operations (e.g., in a procedure, algorithm, or other function) may vary in sequence or be combined or subdivided.

Microservices are small, autonomous services that work together as part of a larger application architecture. They operate as independent units, each responsible for a specific business capability or function within the system. In a typical microservices setup, each service runs its own process and communicates with other services through well-defined APIs, often using lightweight protocols like HTTP/REST or messaging queues. These services are designed to be loosely coupled, allowing for independent development, deployment, and scaling.

Each microservice typically manages its own data store, which can be a dedicated database or a shared database (e.g., a centralized database shared with other microservices) with strict access boundaries. When processing transactions, microservices collaborate by exchanging data and commands, with each micoservice performing its specialized task. For example, in an e-commerce system, separate microservices might handle user authentication, inventory management, payment processing, and order fulfillment. Typically, a first or main microservice can coordinate which other microservices are needed to complete a transaction for a buyer/seller. This modular approach enables teams to develop and maintain different parts of the system independently, facilitating faster development cycles and easier updates. However, it also introduces challenges in maintaining data consistency and managing distributed transactions across multiple services.

Namely, a microservices architecture offers numerous benefits in terms of scalability and modularity, but it can introduce inefficiencies when multiple services need to access the same data to complete a single transaction. This redundancy in data access can lead to several performance and consistency issues. Each microservice, operating independently, may need to query the same database multiple times, resulting in increased network traffic and higher latency. This repetitive data retrieval not only puts unnecessary strain on the database but also extends the overall transaction processing time. These issues are exacerbated exponentially as the number of transactions processed increases.

In addition, the lack of a centralized data access point can complicate data consistency management, as each microservice may be working with slightly different versions of the data at any given moment. This scenario also increases the risk of race conditions and data conflicts, potentially compromising the integrity of the transaction. The need for each microservice to maintain its own database connection and potentially implement its own caching mechanism can lead to increased complexity and resource utilization. These inefficiencies can accumulate, especially in high-volume transaction systems, leading to degraded performance and increased operational costs.

The present application describes a novel system that supports consistent distributed transactions across microservices that use data from an underlying database. The disclosed techniques utilize one or more cache nodes to store a set of computations that may be used by certain microservices in completing a transaction. This way, when one of the microservices is requested to perform a set of operations for the transaction, the set of computations are readily accessible to the microservice from the one or more cache nodes. This approach avoids the need for the microservice to establish a connection with the centralized database and to perform the computations because such data is already made available ahead of time, which improves the speed and efficiency of processing transactions. The present system is able to achieve consistent high throughput and serializable distributed transactions for any applications invoking microservices.

As a result, one or more of the methodologies described herein facilitate solving the technical problem of latency and throughput presented by conventional methods. As such, one or more of the methodologies described herein may obviate a need for certain efforts or computing resources that otherwise would be involved in completing transactions. As a result, resources used by one or more machines, databases, or devices (e.g., within the environment) may be reduced. Examples of such computing resources include processor cycles, network traffic, memory usage, data storage capacity, power consumption, network bandwidth, and cooling capacity.

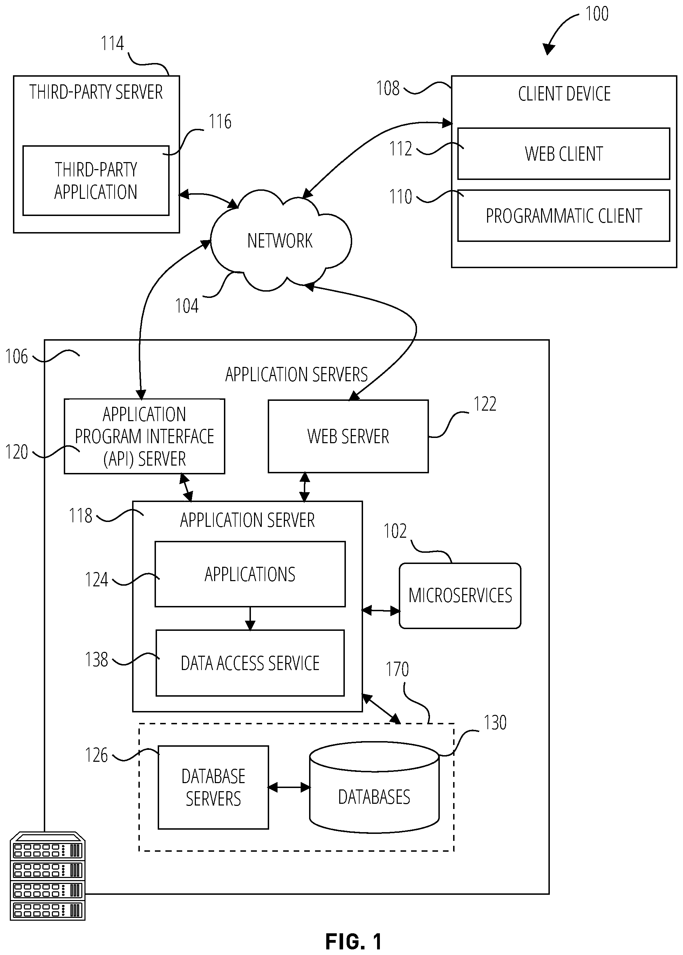

FIG. 1 is a diagrammatic representation of a network environment 100 in which some examples of the present disclosure may be implemented or deployed. One or more application servers 106 provide server-side functionality via a network 104 to a networked user device, in the form of a client device 108. A web client 112 (e.g., a browser) and a programmatic client 110 (e.g., an "app") are hosted and execute on the web client 112.

An Application Program Interface (API) server 120 and a web server 122 provide respective programmatic and web interfaces to application servers 106. A specific application server 118 hosts applications 124 and a data access service 138, which includes components, modules and/or applications.

The applications 124 may provide a number of functions and services to users who access the application servers 106. For example, the applications 124 may include a publication application that enables users to publish content (e.g., product item information) on a hosted web page. While the applications 124 is shown in FIG. 1 to be part of the application servers 106, it will be appreciated that, in alternative examples, the applications 124 may be separate and distinct from the application server 118. The applications 124 can also provide buyers to purchase items from an online electronic commerce platform where users can buy and sell physical (tangible) and/or intangible items.

The data access service 138 coordinates requests from the applications 124 to access services provided by microservices 102 and to access data stored in one or more cache nodes and/or databases 130. For example, the data access service 138 coordinates transaction requests from the applications 124 across distributed database servers of the microservices 102. The microservices 102 can include shipping microservices, item bundle microservices, tax microservices, promotion microservices, checkout microservices, shopping cart microservices, and/or any other suitable microservice that can be utilized to complete a particular transaction (e.g., a purchase transaction, a browsing for items transaction, a shopping cart transaction, a checkout transaction, and so forth).

Further, while the network environment 100 shown in FIG. 1 employs a client-server architecture, the examples are, of course, not limited to such an architecture, and could equally well find application in a distributed, or peer-to-peer, architecture system. The applications 124 could also be implemented as a standalone software program, which do not necessarily have networking capabilities.

The web client 112 accesses the applications 124 via the web interface supported by the web server 122. Similarly, the programmatic client 110 accesses the various services, microservices, and functions provided by the applications 124 via the programmatic interface provided by the Application Program Interface (API) server 120. In one example, the programmatic client 110 may, for example, be a seller application (e.g., eBay Application developed by eBay Inc., of San Jose, California) to enable sellers to author and manage listings on the network environment 100 in an offline manner, and to perform batch-mode communications between the programmatic client 110 and the application servers 106. In one example, the programmatic client 110 may, for example, be a buyer (purchaser) application (e.g., eBay Application developed by eBay Inc., of San Jose, California) to enable buyers to search available listings for items on the network environment 100 in an online manner, to select items to purchase, and to perform batch-mode communications between the programmatic client 110 and the application servers 106.

FIG. 1 also illustrates a third-party application 116 executing on a third-party server 114 as having programmatic access to the application servers 106 via the programmatic interface provided by the Application Program Interface (API) server 120. For example, the third-party application 116 may, utilizing information retrieved from the application server 118, support one or more features or functions on a website hosted by a third party. The third-party website may, for example, provide one or more promotional, marketplace, or payment functions that are supported by the relevant applications of the application servers 106.

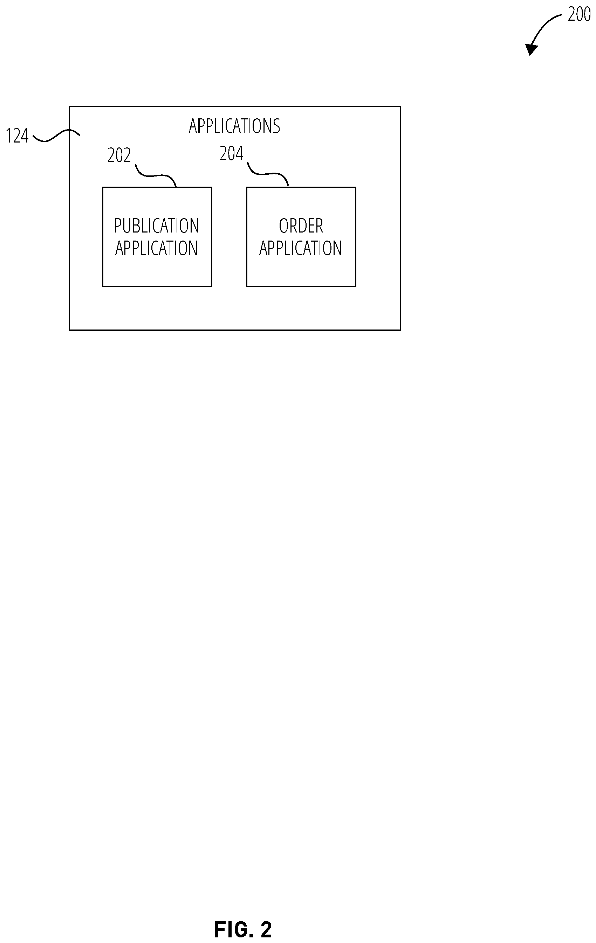

Any of the systems or machines (e.g., databases, devices, servers) shown in, or associated with, FIG. 1 may be implemented in a special-purpose (e.g., specialized or otherwise non-generic) computer that has been modified (e.g., configured or programmed by software, such as one or more software modules of an application, operating system, firmware, middleware, or other program) to perform one or more of the functions described herein for that system or machine. For example, a special-purpose computer system able to implement any one or more of the methodologies described herein is discussed below with respect to FIG. 2, FIG. 3, and/or FIG. 4, and such a special-purpose computer may accordingly be a means for performing any one or more of the methodologies discussed herein. Within the technical field of such special-purpose computers, a special-purpose computer that has been modified by the structures discussed herein to perform the functions discussed herein is technically improved compared to other special-purpose computers that lack the structures discussed herein or are otherwise unable to perform the functions discussed herein. Accordingly, a special-purpose machine configured according to the systems and methods discussed herein provides an improvement to the technology of similar special-purpose machines.

Moreover, any two or more of the systems or machines illustrated in FIG. 1 may be combined into a single system or machine, and the functions described herein for any single system or machine may be subdivided among multiple systems or machines. Additionally, any number and types of client device 108 may be embodied within the network environment 100. Furthermore, some components or functions of the network environment 100 may be combined or located elsewhere in the network environment 100. For example, some of the functions of the client device 108 may be embodied at the application server 118.

FIG. 2 is a block diagram 200 illustrating the applications 124 that, in one example, are provided as part of the network environment 100. The applications 124 may be hosted on dedicated or shared server machines (not shown) that are communicatively coupled to enable communications between or among server machines. The applications 124 themselves are communicatively coupled (e.g., via appropriate interfaces) to each other and to various data sources, so as to allow information to be passed between or among the applications 124 or so as to allow the applications 124 to share and access common data. The applications 124 may furthermore access one or more databases 130 via the database servers 126.

The application server 118 may provide a number of publishing, listing, and price-setting mechanisms whereby a seller may list (or publish information concerning) goods or services for sale, a buyer can express interest in or indicate a desire to purchase such goods or services, and a price can be set for a transaction pertaining to the goods or services. To this end, the applications 124 is shown to include at least one publication application 202 and one or more order application 204.

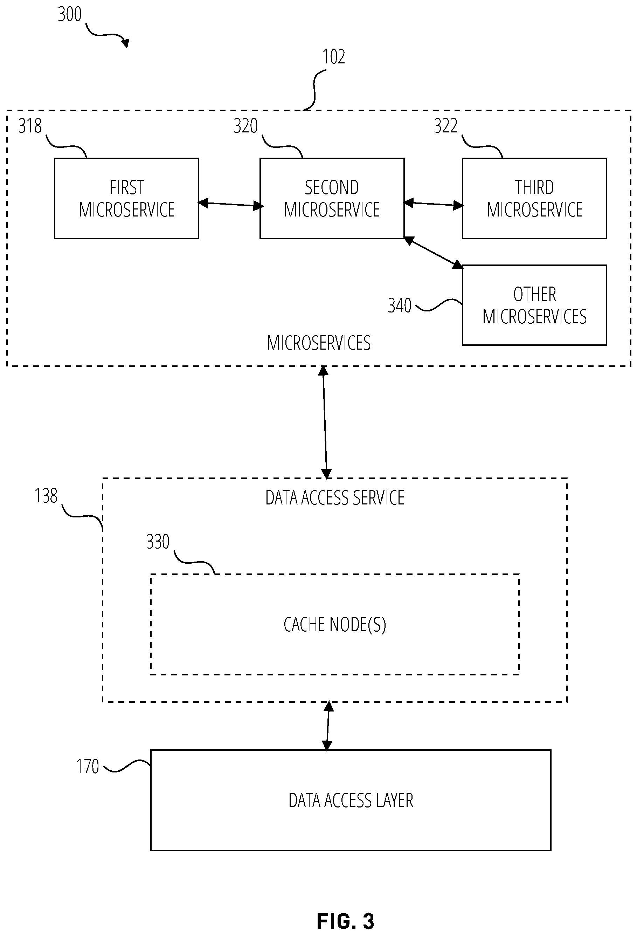

FIG. 3 is a block diagram illustrating a transaction system 300 that, in one example, is provided as part of the network environment 100. The transaction system 300 includes a set of microservices 102 that access the data access services 138 in order to obtain a set of data stored in databases 130 managed by a data access layer 170. The microservices 102 can include first microservice 318, second microservice 320, third microservice 322, and various other microservices 340.

In some examples, the microservices 102 can receive a transaction request from the applications 124. For example, the microservices 102 can receive a transaction request corresponding to an item being placed in a shopping cart and/or corresponding to the applications 124 presenting a shopping cart user interface to an end user or buyer. In such cases, the applications 124 can provide an identifier of one or more items that are in the shopping cart to the microservices 102 (e.g., the first microservice 318). In response, the first microservice 318 can generate a request for information or a set of data related to the one or more items. The request can be provided to the data access service 138 to retrieve the set of data corresponding to the one or more items.

In some cases, the data access service 138 can search an index associated with one or more cache node(s) 330 to determine whether at least a portion of the set of data is stored currently in the cache node(s) 330. If so, the data access service 138 can retrieve the at least the portion of the set of data from the cache node(s) 330 and provide the retrieved information to the first microservice 318. The data access service 138 can retrieve any data that is needed and that is not currently stored in the cache node(s) 330 from the centralized databases 130 managed by the data access layer 170, such as by transmitting a request for the data to the data access layer 170. Once the data is obtained from the data access layer 170, the data access service 138 updates the index of data stored in the cache node(s) 330 and stores the data in the cache node(s) 330. The data access service 138 can also provide the data retrieved from the data access layer 170 to the first microservice 318.

In the process of generating the request for the information by the first microservice 318, the first microservice 318 can apply one or more predictive models to determine what data may or may not be needed by additional microservices 102. Namely, the first microservice 318 may be responsible for obtaining pricing information for the items in the shopping cart but may not be configured to compute shipping costs, item bundles, and/or tax information for the items. The first microservice 318 can predict that the additional information may be needed by other downstream microservices 102, such as second microservice 320, third microservice 322, and so forth. In such cases, the first microservice 318 can include in the request for the information an identification of the additional information that may be needed by the other downstream services. In some cases, the additional information may be derived or computed based on a set of information stored in the cache node(s) 330 and/or a set of information that is utilized by the first microservice 318. The first microservice 318 can perform or instruct a service provider to perform one or more computations that are predicted to be needed by the additional microservices. The first microservice 318 can then store the computations in the cache node(s) 330 by transmitting the computations to the data access service 138.

In some cases, the first microservice 318 can transmit a request, in response to receiving the transaction request, to the second microservice 320 to perform one or more computations or generate one or more computations. The second microservice 320, in response to the request, can determine what data is needed to perform the computations. The second microservice 320 can communicate the identification of the data that is needed to the data access service 138. If the data is available in the cache node(s) 330 (e.g., because it was prefetched predictively by the first microservice 318), the data access service 138 returns the requested data to the second microservice 320. If the data is not available in the cache node(s) 330, the data access service 138 communicates with the data access layer 170 to obtain the data that is needed to provide to the second microservice 320. The second microservice 320 can then perform the necessary computations and store the result in the cache node(s) 330. The second microservice 320 can provide the computed information (e.g., retrieved from the cache node(s) 330 and/or computed based on data obtained from the data access layer 170) to the first microservice 318.

For example, the second microservice 320 can be a shipping microservice provider. The shipping microservice provider can perform operations to compute a shipping speed and shipping rate associated with the item corresponding to the transaction (e.g., the item that is in the shopping cart). The second microservice 320 can access item information, such as the size and weight, along with information indicating whether the same entity (e.g., buyer) is purchasing additional items in a bundle from the same seller (other entity). The second microservice 320 can also obtain location information (e.g., a location of the buyer that is viewing the shopping cart) as part of the accessed item information. Based on this information, the second microservice 320 can compute a shipping rate and shipping speed for the item in the shopping cart and provide that information to the first microservice 318. The first microservice 318 can update a shopping cart view based on the information provided by the second microservice 320 and/or can wait for a checkout transaction to be performed to provide the information.

The second microservice 320 and/or the first microservice 318 can also call on the third microservice 322 to perform or compute other computations for the item in the shopping cart transaction. The third microservice 322 can be a tax computation provider. The third microservice 322 can obtain a status or category associated with the buyer/seller and can compute a tax associated with the item in the shopping cart. The third microservice 322 can provide that information to the first microservice 318. The first microservice 318 can update a shopping cart view based on the information provided by the third microservice 322 and/or can wait for a checkout transaction to be performed to provide the information.

In some examples, the first microservice 318 receives an additional transaction request (which can be an original/first transaction request) corresponding to checking out or completing a purchase transaction for an item (e.g., an item that was previously in the shopping cart and for which a previous transaction was performed). In response, the first microservice 318 can generate a request for information or a set of data related to the item or items being checked out or purchased. The request can be provided to the data access service 138 to retrieve the set of data corresponding to the one or more items.

In some cases, the data access service 138 can search an index associated with one or more cache node(s) 330 to determine whether at least a portion of the set of data is stored currently in the cache node(s) 330. The data access service 138 can determine that the information needed for checkout (e.g., price, tax, shipping options, shipping rate, and so forth) is stored in the cache node(s) 330. This may be the result of the predictive fetching of the data based on the previous transaction that was performed relating to the shopping cart. The data access service 138 can retrieve the at least the portion of the set of data from the cache node(s) 330 and provide the retrieved information to the first microservice 318. The data access service 138 can retrieve any data that is needed and that is not currently stored in the cache node(s) 330 from the centralized databases 130 managed by the data access layer 170, such as by transmitting a request for the data to the data access layer 170. Once the data is obtained from the data access layer 170, the data access service 138 updates the index of data stored in the cache node(s) 330 and stores the data in the cache node(s) 330. The data access service 138 can also provide the data retrieved from the data access layer 170 to the first microservice 318.

In some cases, the first microservice 318 can transmit a request, in response to receiving the additional transaction request, to the second microservice 320 to perform one or more computations or generate one or more computations. The second microservice 320, in response to the request, can determine what data is needed to perform the computations. The second microservice 320 can communicate the identification of the data that is needed to the data access service 138. If the data is available in the cache node(s) 330 (e.g., because it was prefetched predictively by the first microservice 318), the data access service 138 returns the requested data to the second microservice 320. If the data is not available in the cache node(s) 330, the data access service 138 communicates with the data access layer 170 to obtain the data that is needed to provide to the second microservice 320. The second microservice 320 can then perform the necessary computations and store the result in the cache node(s) 330. The second microservice 320 can provide the computed information (e.g., retrieved from the cache node(s) 330 and/or computed based on data obtained from the data access layer 170) to the first microservice 318.

For example, the second microservice 320 can be a shipping microservice provider. The shipping microservice provider can perform operations to compute a shipping speed and shipping rate associated with the item corresponding to the transaction (e.g., the item that is in the shopping cart). The second microservice 320 can access item information, such as the size and weight, along with information indicating whether the same entity (e.g., buyer) is purchasing additional items in a bundle from the same seller (other entity). The second microservice 320 can also obtain location information (e.g., a location of the buyer that is viewing the shopping cart) as part of the accessed item information. Based on this information, the second microservice 320 can compute a shipping rate and shipping speed for the item in the shopping cart and provide that information to the first microservice 318. The first microservice 318 can update a checkout view (graphical user interface) based on the information provided by the second microservice 320.

The second microservice 320 and/or the first microservice 318 can also call on the third microservice 322 to perform or compute other computations for the item in the shopping cart transaction. The third microservice 322 can be a tax computation provider. The third microservice 322 can obtain a status or category associated with the buyer/seller and can compute a tax associated with the item in the shopping cart. The third microservice 322 can provide that information to the first microservice 318. The first microservice 318 can update the checkout view based on the information provided by the third microservice 322.

In some examples, the first microservice 318 can receive a transaction request from a second entity. Namely, the first microservice 318 may have received a transaction request from a first buyer indicating that one or more items are in a shopping cart view. The first buyer may be in a first category (first tax category) and in a particular location. The first microservice 318 can determine that the transaction request being received from the second entity corresponds to a shopping cart view or checkout view. The first microservice 318 can identify one or more microservices 102 and/or information that is needed to complete the transaction request for the second entity. The first microservice 318 can transmit a request for information to the data access service 138.

The data access service 138 may have previously cached information in the cache node(s) 330 for the first category and particular location of the first buyer when the first microservice 318 generates the request for information in response to the transaction request from the first buyer. The data access service 138 can determine that at least some of the same information is already stored in the cache node(s) 330 based on the index. In such cases, the data access service 138 can provide the requested information including precomputed data (e.g., precomputed tax rate and shipping information) to the first microservice 318 without communicating with the databases 130 managed by the data access layer 170. This expedites the response process and improves the overall efficiencies of the system. The first microservice 318 can then use this information and can request that the second microservice 320 and/or other microservices provide data needed to complete the additional transaction request. The second microservice 320 can similarly access the precomputed information from the cache node(s) 330 because such information has already been computed and stored in the cache node(s) 330 when the transaction request was performed for the first buyer. The second microservice 320 can retrieve the information and perform one or more additional computations and provide the results to the first microservice 318. The first microservice 318 can then update the shopping cart or checkout view for the second buyer in an expedited and more efficient manner.

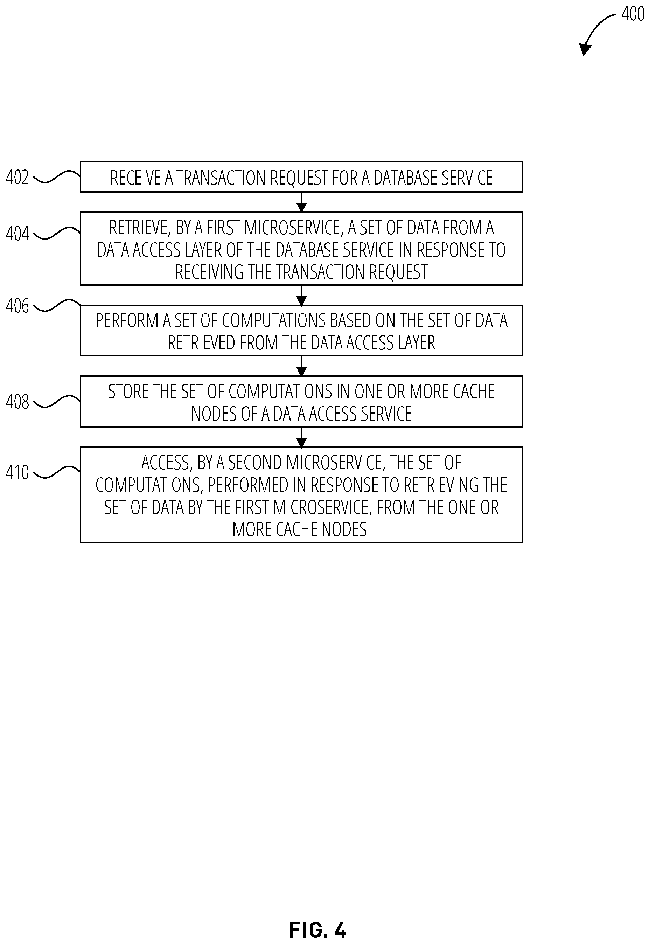

FIG. 4 illustrates a routine 400 (method or process) in accordance with one example. The operations discussed in FIG. 4 can be performed by the data access service 138. In operation 402, routine 400 receives a transaction request for a database service. In operation 404, routine 400 retrieves, by a first microservice, a set of data from a data access layer of the database service in response to receiving the transaction request. In operation 406, routine 400 performs a set of computations based on the set of data retrieved from the data access layer. In operation 408, routine 400 stores the set of computations in one or more cache nodes of a data access service. In operation 410, routine 400 accesses, by a second microservice, the set of computations, performed in response to retrieving the set of data by the first microservice, from the one or more cache nodes.

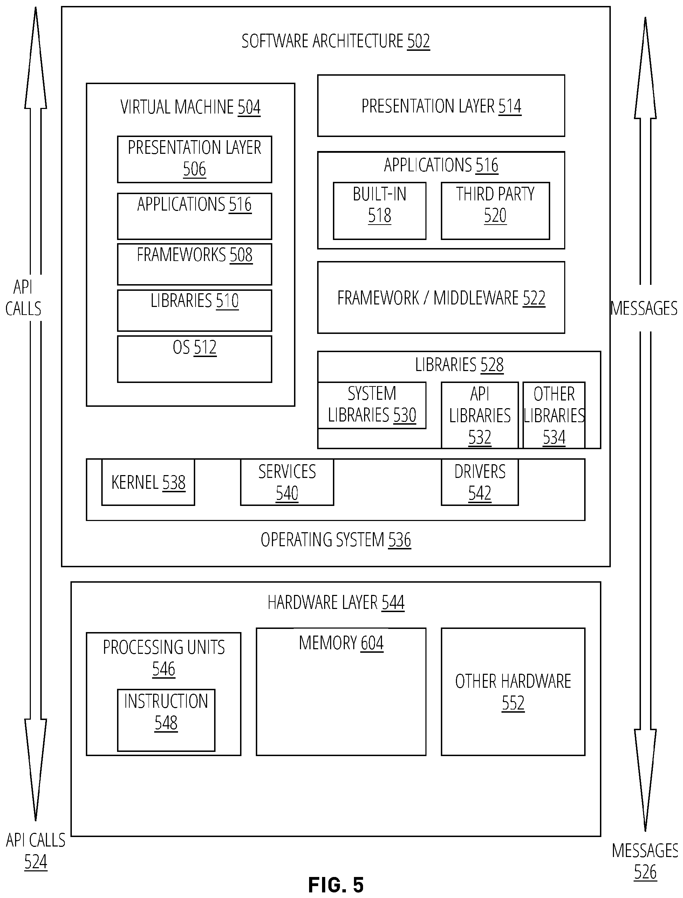

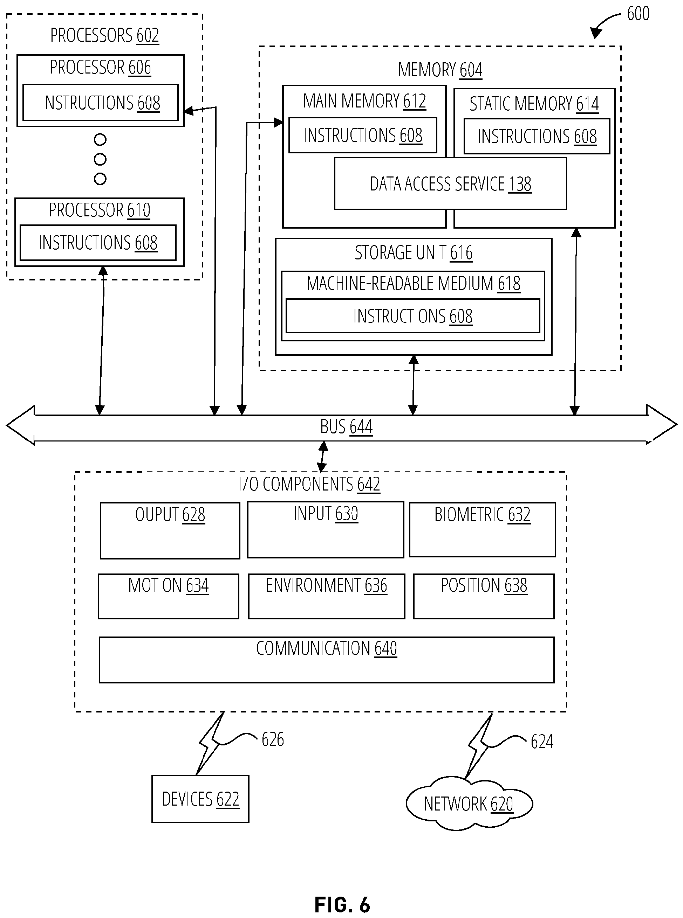

FIG. 5 is a block diagram illustrating an example of a software architecture 502 that may be installed on a machine, according to some examples. FIG. 5 is merely a non-limiting example of a software architecture, and it will be appreciated that many other architectures may be implemented to facilitate the functionality described herein. The software architecture 502 may be executing on hardware such as a machine 600 of FIG. 6 that includes, among other things, processors 610, memory 604, and I/O components 642. A representative hardware layer 544 is illustrated and can represent, for example, the machine 600 of FIG. 6. The representative hardware layer 544 comprises one or more processing units 546 having associated executable instructions 548. The executable instructions 548 represent the executable instructions of the software architecture 502. The hardware layer 544 also includes memory 604, which also have the executable instructions 548. The hardware layer 544 may also comprise other hardware 552, which represents any other hardware of the hardware layer 544, such as the other hardware illustrated as part of the machine 600.

The instructions 548 may be transmitted or received over the network using a transmission medium via a network interface device (e.g., a network interface component included in the communication components 640) and utilizing any one of a number of well-known transfer protocols (e.g., hypertext transfer protocol (HTTP)). Similarly, the instructions 548 may be transmitted or received using a transmission medium via the coupling (e.g., a peer-to-peer coupling) to the devices. The terms "transmission medium" and "Signal Medium" mean the same thing and may be used interchangeably in this disclosure. The terms "transmission medium" and "Signal Medium" shall be taken to include any intangible medium that is capable of storing, encoding, or carrying the instructions 548 for execution by the machine 600, and include digital or analog communications signals or other intangible media to facilitate communication of such software. Hence, the terms "transmission medium" and "Signal Medium" shall be taken to include any form of modulated data signal, carrier wave, and so forth. The term "modulated data signal" means a signal that has one or more of its characteristics set or changed in such a manner as to encode information in the signal.

The terms "machine-readable medium," "computer-readable medium," and "device-readable medium" mean the same thing and may be used interchangeably in this disclosure. The terms are defined to include both machine-storage media and transmission media. Thus, the terms include both storage devices/media and carrier waves/modulated data signals.

As used herein, the terms "Machine-Storage Medium," "device-storage medium," and "computer-storage medium" mean the same thing and may be used interchangeably in this disclosure. The terms refer to a single or multiple storage devices and/or media (e.g., a centralized or distributed database, and/or associated caches and servers) that store executable instructions and/or data. The terms shall accordingly be taken to include, but not be limited to, solid-state memories, and optical and magnetic media, including memory internal or external to Processors. Specific examples of Machine-Storage Media, computer-storage media, and/or device-storage media include non-volatile memory, including by way of example semiconductor memory devices, e.g., erasable programmable read-only memory (EPROM), electrically erasable programmable read-only memory (EEPROM), field-programmable gate arrays (FPGAs), and flash memory devices; magnetic disks such as internal hard disks and removable disks; magneto-optical disks; and CD-ROM and DVD-ROM disks. The terms "Machine-Storage Medium," "computer-storage medium," and "device-storage medium" are non-transitory Computer-Readable Media and specifically exclude carrier waves, modulated data signals, and other such media, at least some of which are covered under the term "Signal Medium."

In the example architecture of FIG. 5, the software architecture 502 may be conceptualized as a stack of layers, where each layer provides particular functionality. For example, the software architecture 502 may include layers such as an operating system 536, libraries 528, framework / middleware 522, applications 516, and a presentation layer 514. Operationally, the applications 516 or other components within the layers may invoke API calls API calls 524 through the software stack and receive a response, returned values, and so forth (illustrated as messages messages 526) in response to the API calls 524. The layers illustrated are representative in nature, and not all software architectures have all layers. For example, some mobile or special-purpose operating systems may not provide a framework / middleware 522 layer, while others may provide such a layer. Other software architectures may include additional or different layers.

The operating system 536 may manage hardware resources and provide common services. The operating system 536 may include, for example, a kernel 538, services 540, and drivers 542. The kernel 538 may act as an abstraction layer between the hardware and the other software layers. For example, the kernel 538 may be responsible for memory management, processor management (e.g., scheduling), component management, networking, security settings, and so on. The services 540 may provide other common services for the other software layers. The drivers 542 may be responsible for controlling or interfacing with the underlying hardware. For instance, the drivers 542 may include display drivers, camera drivers, Bluetooth^{®} drivers, flash memory drivers, serial communication drivers (e.g., Universal Serial Bus (USB) drivers), Wi-Fi^{®} drivers, audio drivers, power management drivers, and so forth depending on the hardware configuration.

The libraries 528 may provide a common infrastructure that may be utilized by the applications 516 and/or other components and/or layers. The libraries 528 typically provide functionality that allows other software modules to perform tasks in an easier fashion than by interfacing directly with the underlying operating system 536 functionality (e.g., kernel 538, services 540, or drivers 542). The libraries 528 may include system libraries 530 (e.g., C standard library) that may provide functions such as memory allocation functions, string manipulation functions, mathematic functions, and the like. In addition, the libraries 528 may include API libraries 532 such as media libraries (e.g., libraries to support presentation and manipulation of various media formats such as MPEG4, H.264, MP3, AAC, AMR, JPG, and PNG), graphics libraries (e.g., an OpenGL framework that may be used to render 2D and 3D graphic content on a display), database libraries (e.g., SQLite that may provide various relational database functions), web libraries (e.g., WebKit that may provide web browsing functionality), and the like. The libraries 528 may also include a wide variety of other libraries 534 to provide many other APIs to the applications 516 and other software components/modules.

The frameworks/middleware 522 (also sometimes referred to as middleware) may provide a higher-level common infrastructure that may be utilized by the applications 516 or other software components/modules. For example, the frameworks/middleware 522 may provide various graphical user interface functions, high-level resource management, high-level location services, and so forth. The frameworks/middleware 522 may provide a broad spectrum of other APIs that may be utilized by the applications 516 and/or other software components/modules, some of which may be specific to a particular operating system or platform.

The applications 516 include built-in applications 518 and/or third-party applications 520. Examples of representative built-in applications 518 may include, but are not limited to, a home application, a contacts application, a browser application, a book reader application, a location application, a media application, a messaging application, or a game application.

The third-party applications 520 may include any of the built-in applications 518, as well as a broad assortment of other applications. In a specific example, the third-party applications 520 (e.g., an application developed using the Android^{™} or iOS^{™} software development kit (SDK) by an entity other than the vendor of the particular platform) may be mobile software running on a mobile operating system such as iOS^{™}, Android^{™}, or other mobile operating systems. In this example, the third-party applications 520 may invoke the API calls 524 provided by the mobile operating system such as the operating system 536 to facilitate functionality described herein.

The applications 516 may utilize built-in operating system functions (e.g., kernel 538, services 540, or drivers 542), libraries (e.g., system libraries 530, API libraries 532, and other libraries 534), or framework / middleware 522 to create user interfaces to interact with users of the system. Alternatively, or additionally, in some systems, interactions with a user may occur through a presentation layer, such as the presentation layer 514. In these systems, the application/module "logic" can be separated from the aspects of the application/module that interact with the user.

Some software architectures utilize virtual machines. In the example of FIG. 5, this is illustrated by a virtual machine 504. The virtual machine 504 creates a software environment where applications/modules can execute as if they were executing on a hardware machine (e.g., the machine 600 of FIG. 6). The virtual machine 504 is hosted by a host operating system (e.g., the operating system 536) and typically, although not always, has a virtual machine monitor, which manages the operation of the virtual machine 504 as well as the interface with the host operating system (e.g., the operating system 536). A software architecture executes within the virtual machine 504, such as an operating system 512, libraries 510, frameworks 508, applications 516, or a presentation layer 506. These layers of software architecture executing within the virtual machine 504 can be the same as corresponding layers previously described or may be different.

FIG. 6 is a diagrammatic representation of the machine 600 within which instructions 608 (e.g., software, a program, an application, an applet, an app, or other executable code) for causing the machine 600 to perform any one or more of the methodologies discussed herein may be executed. For example, the instructions 608 may cause the machine 600 to execute any one or more of the methods described herein. The instructions 608 transform the general, non-programmed machine 600 into a particular machine 600 programmed to carry out the described and illustrated functions in the manner described. The machine 600 may operate as a standalone device or may be coupled (e.g., networked) to other machines. In a networked deployment, the machine 600 may operate in the capacity of a server machine or a client machine in a server-client network environment, or as a peer machine in a peer-to-peer (or distributed) network environment. The machine 600 may comprise, but not be limited to, a server computer, a client computer, a personal computer (PC), a tablet computer, a laptop computer, a netbook, a set-top box (STB), a PDA, an entertainment media system, a cellular telephone, a smart phone, a mobile device, a wearable device (e.g., a smart watch), a smart home device (e.g., a smart appliance), other smart devices, a web appliance, a network router, a network switch, a network bridge, or any machine capable of executing the instructions 608, sequentially or otherwise, that specify actions to be taken by the machine 600. Further, while only a single machine 600 is illustrated, the term "machine" shall also be taken to include a collection of machines that individually or jointly execute the instructions 608 to perform any one or more of the methodologies discussed herein.

The machine 600 may include processors 602, memory 604, and I/O components 642, which may be configured to communicate with each other via a bus 644. In an example, the processors 602 (e.g., a Central Processing Unit (CPU), a Reduced Instruction Set Computing (RISC) processor, a Complex Instruction Set Computing (CISC) processor, a Graphics Processing Unit (GPU), a Digital Signal Processor (DSP), an ASIC, a Radio-Frequency Integrated Circuit (RFIC), another processor, or any suitable combination thereof) may include, for example, a processor 606 and a processor 610 that execute the instructions 608. The term "processor" is intended to include multi-core processors that may comprise two or more independent processors (sometimes referred to as "cores") that may execute instructions contemporaneously. Although FIG. 6 shows multiple processors 602, the machine 600 may include a single processor with a single core, a single processor with multiple cores (e.g., a multi-core processor), multiple processors with a single core, multiple processors with multiples cores, or any combination thereof.

The memory 604 includes a main memory 612, a static memory 614, and a storage unit 616, both accessible to the processors 602 via the bus 644. The main memory 604, the static memory 614, and storage unit 616 store the instructions 608 embodying any one or more of the methodologies or functions described herein. The instructions 608 may also reside, completely or partially, within the main memory 612, within the static memory 614, within machine-readable medium 618 within the storage unit 616, within at least one of the processors 602 (e.g., within the processor's cache memory), or any suitable combination thereof, during execution thereof by the machine 600.

The I/O components 642 may include a wide variety of components to receive input, provide output, produce output, transmit information, exchange information, capture measurements, and so on. The specific I/O components 642 that are included in a particular machine will depend on the type of machine. For example, portable machines such as mobile phones may include a touch input device or other such input mechanisms, while a headless server machine will likely not include such a touch input device. It will be appreciated that the I/O components 642 may include many other components that are not shown in FIG. 6. In various examples, the I/O components 642 may include output components 628 and input components 630. The output components 628 may include visual components (e.g., a display such as a plasma display panel (PDP), a light emitting diode (LED) display, a liquid crystal display (LCD), a projector, or a cathode ray tube (CRT)), acoustic components (e.g., speakers), haptic components (e.g., a vibratory motor, resistance mechanisms), other signal generators, and so forth. The input components 630 may include alphanumeric input components (e.g., a keyboard, a touch screen configured to receive alphanumeric input, a photo-optical keyboard, or other alphanumeric input components), point-based input components (e.g., a mouse, a touchpad, a trackball, a joystick, a motion sensor, or another pointing instrument), tactile input components (e.g., a physical button, a touch screen that provides location and/or force of touches or touch gestures, or other tactile input components), audio input components (e.g., a microphone), and the like.

In further examples, the I/O components 642 may include biometric components 632, motion components 634, environmental components 636, or position components 638, among a wide array of other components. For example, the biometric components 632 include components to detect expressions (e.g., hand expressions, facial expressions, vocal expressions, body gestures, or eye tracking), measure biosignals (e.g., blood pressure, heart rate, body temperature, perspiration, or brain waves), identify a person (e.g., voice identification, retinal identification, facial identification, fingerprint identification, or electroencephalogram-based identification), and the like. The motion components 634 include acceleration sensor components (e.g., accelerometer), gravitation sensor components, rotation sensor components (e.g., gyroscope), and so forth. The environmental components 636 include, for example, illumination sensor components (e.g., photometer), temperature sensor components (e.g., one or more thermometers that detect ambient temperature), humidity sensor components, pressure sensor components (e.g., barometer), acoustic sensor components (e.g., one or more microphones that detect background noise), proximity sensor components (e.g., infrared sensors that detect nearby objects), gas sensors (e.g., gas detection sensors to detection concentrations of hazardous gases for safety or to measure pollutants in the atmosphere), or other components that may provide indications, measurements, or signals corresponding to a surrounding physical environment. The position components 638 include location sensor components (e.g., a GPS receiver component), altitude sensor components (e.g., altimeters or barometers that detect air pressure from which altitude may be derived), orientation sensor components (e.g., magnetometers), and the like.

Communication may be implemented using a wide variety of technologies. The I/O components 642 further include communication components 640 operable to couple the machine 600 to a network 620 or devices 622 via a coupling 624 and a coupling 626, respectively. For example, the communication components 640 may include a network interface component or another suitable device to interface with the network 620. In further examples, the communication components 640 may include wired communication components, wireless communication components, cellular communication components, Near Field Communication (NFC) components, Bluetooth^{®} components (e.g., Bluetooth^{®} Low Energy), Wi-Fi^{®} components, and other communication components to provide communication via other modalities. The devices 622 may be another machine or any of a wide variety of peripheral devices (e.g., a peripheral device coupled via a USB).

Moreover, the communication components 640 may detect identifiers or include components operable to detect identifiers. For example, the communication components 640 may include Radio Frequency Identification (RFID) tag reader components, NFC smart tag detection components, optical reader components (e.g., an optical sensor to detect one-dimensional bar codes such as Universal Product Code (UPC) bar code, multi-dimensional bar codes such as Quick Response (QR) code, Aztec code, Data Matrix, Dataglyph, MaxiCode, PDF417, Ultra Code, UCC RSS-2D bar code, and other optical codes), or acoustic detection components (e.g., microphones to identify tagged audio signals). In addition, a variety of information may be derived via the communication components 640, such as location via Internet Protocol (IP) geolocation, location via Wi-Fi^{®} signal triangulation, location via detecting an NFC beacon signal that may indicate a particular location, and so forth.

The various memories (e.g., memory 604, main memory 612, static memory 614, and/or memory of the processors 602) and/or storage unit 616 may store one or more sets of instructions and data structures (e.g., software) embodying or used by any one or more of the methodologies or functions described herein. These instructions (e.g., the instructions 608), when executed by processors 602, cause various operations to implement the disclosed examples.

The instructions 608 may be transmitted or received over the network 620, using a transmission medium, via a network interface device (e.g., a network interface component included in the communication components 640) and using any one of a number of well-known transfer protocols (e.g., hypertext transfer protocol (HTTP)). Similarly, the instructions 608 may be transmitted or received using a transmission medium via the coupling 626 (e.g., a peer-to-peer coupling) to the devices 622.

Although examples have been described, it will be evident that various modifications and changes may be made to these examples without departing from the broader scope of the present disclosure. Accordingly, the specification and drawings are to be regarded in an illustrative rather than a restrictive sense. The accompanying drawings that form a part hereof, show by way of illustration, and not of limitation, specific examples in which the subject matter may be practiced. The examples illustrated are described in sufficient detail to enable those skilled in the art to practice the teachings disclosed herein. Other examples may be utilized and derived therefrom, such that structural and logical substitutions and changes may be made without departing from the scope of this disclosure. This Detailed Description, therefore, is not to be taken in a limiting sense, and the scope of various examples is defined only by the appended claims, along with the full range of equivalents to which such claims are entitled.

Such examples of the inventive subject matter may be referred to herein, individually and/or collectively, by the term "invention" merely for convenience and without intending to voluntarily limit the scope of this application to any single invention or inventive concept if more than one is in fact disclosed. Thus, although specific examples have been illustrated and described herein, it should be appreciated that any arrangement calculated to achieve the same purpose may be substituted for the specific examples shown. This disclosure is intended to cover any and all adaptations or variations of various examples. Combinations of the above examples, and other examples not specifically described herein, will be apparent to those of skill in the art upon reviewing the above description.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in a single example for the purpose of streamlining the disclosure. This method of disclosure is not to be interpreted as reflecting an intention that the claimed examples require more features than are expressly recited in each claim. Rather, as the following claims reflect, inventive subject matter lies in less than all features of a single disclosed example. Thus the following claims are hereby incorporated into the Detailed Description, with each claim standing on its own as a separate example.

In view of the disclosure above, various examples are set forth below. It should be noted that one or more features of an example, taken in isolation or combination, should be considered within the disclosure of this application.

Example 1. A computer-implemented method comprising: receiving a transaction request for a database service; retrieving, by a first microservice, a set of data from a data access layer of the database service in response to receiving the transaction request; performing a set of computations based on the set of data retrieved from the data access layer; storing the set of computations in one or more cache nodes of a data access service; and accessing, by a second microservice, the set of computations, performed in response to retrieving the set of data by the first microservice, from the one or more cache nodes.

Example 2. The computer-implemented method of Example 1, further comprising: transmitting the transaction request from the first microservice to the data access service; determining, by the data access service, that the set of data is unavailable in the one or more cache nodes; and in response to determining, by the data access service, that the set of data is unavailable in the one or more cache nodes, retrieving the set of data from the data access layer.

Example 3. The computer-implemented method of any one of Examples 1-2, further comprising: determining, by the first microservice, that the transaction request is associated with the second microservice; and in response to determining, by the first microservice, that the transaction request is associated with the second microservice, transmitting, from the first microservice to the second microservice, a request to perform one or more operations to complete the transaction request.

Example 4. The computer-implemented method of any one of Examples 1-3, further comprising: determining, by the second microservice, that the transaction request is associated a set of additional microservices; and in response to determining, by the second microservice, that the transaction request is associated the set of additional microservices, transmitting, from the second microservice to each microservice in the set of additional microservices, a request to perform respective operations to complete the transaction request.

Example 5. The computer-implemented method of any one of Examples 1-4, further comprising: deleting at least a portion of the set of computations from the one or more cache nodes after a threshold period of time.

Example 6. The computer-implemented method of any one of Examples 1-5, wherein the set of computations is accessed by the second microservice from the one or more cache nodes without transmitting a request to the data access layer.

Example 7. The computer-implemented method of any one of Examples 1-6, further comprising: processing the set of computations by the second microservice; transmitting the processed set of computations to the first microservice from the second microservice; and completing, by the first microservice, the transaction request based on the processed set of computations received from the second microservice.

Example 8. The computer-implemented method of any one of Examples 1-7, wherein the transaction request is a first transaction request, further comprising: receiving a second transaction request; determining that the second transaction request is associated with at least a portion of the set of data previously retrieved in response to receiving the first transaction request; and accessing the portion of the set of data from the one or more cache nodes by the first microservice to complete the second transaction request.

Example 9. The computer-implemented method of any one of Examples 1-8, further comprising: determining, by the first microservice, that an item associated with the transaction is in an item bundle corresponding to an individual entity, the item bundle comprising a plurality of items; and storing the item bundle in the one or more cache nodes in response to determining, by the first microservice, that the item associated with the transaction is in the item bundle corresponding to the individual entity.

Example 10. The computer-implemented method of any one of Examples 1-9, further comprising: determining, by the first microservice, a location associated with the transaction request; and performing the set of computations based on the location associated with the transaction request and the set of data.

Example 11. The computer-implemented method of any one of Examples 1-10, wherein the transaction request is a first transaction request, further comprising: receiving an additional transaction request for the database service, the additional transaction request being associated with the location of the first transaction request; querying the data access service to determine whether the set of computations for the location have been stored in the one or more cache nodes; and accessing the set of computations for the location, previously computed in response to the first transaction request, by the second microservice in response to receiving the additional transaction request.

Example 12. The computer-implemented method of any one of Examples 1-11, determining, by the first microservice, a category of a first entity associated with the transaction request; and performing the set of computations based on the category of the first entity associated with the transaction request and the set of data.

Example 13. The computer-implemented method of any one of Examples 1-12, wherein the transaction request is a first transaction request, further comprising: receiving an additional transaction request for the database service, the additional transaction request being associated with a category of a second entity that is identical to the category of the first entity; querying the data access service to determine whether the set of computations for the category of the first entity have been stored in the one or more cache nodes; and accessing the set of computations for the category of the second entity, previously computed in response to the first transaction request, by the second microservice in response to receiving the additional transaction request.

Example 14. The computer-implemented method of any one of Examples 1-13, wherein the one or more cache nodes are distributed across multiple computing nodes.

Example 15. The computer-implemented method of any one of Examples 1-14, further comprising: predicting that the transaction request is associated with an additional transaction request; identifying a set of microservices associated with the additional transaction request; retrieving an additional set of data from the data access layer associated with the additional transaction request; and storing the additional set of data in the one or more cache nodes, the additional set of data being accessed by the set of microservices from the one or more cache nodes in response to receiving the additional transaction request following completion of the transaction request.

## Claims

1. A computer-implemented method for improving speed and efficiency of processing, the method comprising:
receiving a transaction request for a database service;
retrieving, by a first microservice, a set of data from a data access layer of the database service in response to receiving the transaction request;
performing a set of computations based on the set of data retrieved from the data access layer;
storing the set of computations in one or more cache nodes of a data access service; and
accessing, by a second microservice, the set of computations from the one or more cache nodes.

2. The computer-implemented method of claim 1, further comprising:
transmitting the transaction request from the first microservice to the data access service;
determining, by the data access service, that the set of data is unavailable in the one or more cache nodes; and
in response to determining, by the data access service, that the set of data is unavailable in the one or more cache nodes, retrieving the set of data from the data access layer.

3. The computer-implemented method of claim 1 or claim 2, further comprising:
determining, by the first microservice, that the transaction request is associated with the second microservice; and
in response to determining, by the first microservice, that the transaction request is associated with the second microservice, transmitting, from the first microservice to the second microservice, a request to perform one or more operations to complete the transaction request.

4. The computer-implemented method of claim 3, further comprising:
determining, by the second microservice, that the transaction request is associated with a set of additional microservices; and
in response to determining, by the second microservice, that the transaction request is associated with the set of additional microservices, transmitting, from the second microservice to each microservice in the set of additional microservices, a request to perform respective operations to complete the transaction request.

5. The computer-implemented method of any one of claims 1 to 4, further comprising:
deleting at least a portion of the set of computations from the one or more cache nodes after a threshold period of time; and/or
wherein the set of computations is accessed by the second microservice from the one or more cache nodes without transmitting a request to the data access layer; and/or
further comprising:
processing the set of computations by the second microservice;
transmitting the processed set of computations to the first microservice from the second microservice; and
completing, by the first microservice, the transaction request based on the processed set of computations received from the second microservice.

6. The computer-implemented method of any one of claims 1 to 5, wherein the transaction request is a first transaction request, further comprising:
receiving a second transaction request;
determining that the second transaction request is associated with at least a portion of the set of data previously retrieved in response to receiving the first transaction request; and
accessing the portion of the set of data from the one or more cache nodes by the first microservice to complete the second transaction request.

7. The computer-implemented method of any one of claims 1 to 6, further comprising:
determining, by the first microservice, that an item associated with the transaction request is in an item bundle corresponding to an individual entity, the item bundle comprising a plurality of items; and
storing the item bundle in the one or more cache nodes in response to determining, by the first microservice, that the item associated with the transaction request is in the item bundle corresponding to the individual entity.

8. The computer-implemented method of any one of claims 1 to 7, further comprising:
determining, by the first microservice, a location associated with the transaction request; and
performing the set of computations based on the location associated with the transaction request and the set of data.

9. The computer-implemented method of claim 8, wherein the transaction request is a first transaction request, further comprising:
receiving an additional transaction request for the database service, the additional transaction request being associated with the location of the first transaction request;
querying the data access service to determine whether the set of computations for the location have been stored in the one or more cache nodes; and
accessing the set of computations for the location, previously computed in response to the first transaction request, by the second microservice in response to receiving the additional transaction.

10. The computer-implemented method of any one of claims 1 to 9, comprising:
determining, by the first microservice, a category of a first entity associated with the transaction request; and
performing the set of computations based on the category of the first entity associated with the transaction request and the set of data.

11. The computer-implemented method of claim 10, wherein the transaction request is a first transaction request, further comprising:
receiving an additional transaction request for the database service, the additional transaction request being associated with a category of a second entity that is identical to the category of the first entity;
querying the data access service to determine whether the set of computations for the category of the first entity have been stored in the one or more cache nodes; and
accessing the set of computations for the category of the second entity, previously computed in response to the first transaction request, by the second microservice in response to receiving the additional transaction.

12. The computer-implemented method of any one of claims 1 to 11, wherein the one or more cache nodes are distributed across multiple computing nodes.

13. The computer-implemented method of any one of claims 1 to 12, further comprising:
predicting that the transaction request is associated with an additional transaction request;
identifying a set of microservices associated with the additional transaction request;
retrieving an additional set of data from the data access layer associated with the additional transaction request; and
storing the additional set of data in the one or more cache nodes, the additional set of data being accessed by the set of microservices from the one or more cache nodes in response to receiving the additional transaction request following completion of the transaction request.

14. A computing apparatus comprising:
at least one processor; and
a memory storing instructions that, when executed by the at least one processor, configure the apparatus to carry out the method of any preceding claim.

15. A computer readable medium including instructions that when executed by a computer, cause the computer to carry out the method of any one of claims 1 to 13
